# EUROPEAN PATENT SPECIFICATION

(11) **EP 2 529 883 B1**
(45) Date of publication and mention of the grant of the patent: **26.11.2014**
(21) Application number: 10844644.4
(22) Date of filing: 15.09.2010
(51) Int. Cl.: B23Q 11/12, B23B 47/00

(54) **MAIN SHAFT DEVICE FOR BORING MACHINE**
HAUPTWELLENVORRICHTUNG FÜR EINE BOHRMASCHINE
DISPOSITIF D'ARBRE PRINCIPAL POUR PERCEUSE

(30) Priority: 29.01.2010 JP 2010017654
(43) Date of publication of application: 05.12.2012
(73) Proprietor: Mitsubishi Heavy Industries, Ltd., Tokyo 108-8215 (JP)
(72) Inventor: HASEGAWA, Tomoharu, Tokyo 108-8215 (JP); TAUCHI, Hiroyuki, Tokyo 108-8215 (JP)
(74) Representative: Henkel, Breuer & Partner
(86) International application number: PCT/JP2010/065908
(87) International publication number: WO 2011/092887

(56) References cited:
- JP-A- 9 317 778
- JP-A- 9 317 778
- JP-A- 58 034 294
- JP-A- 58 034 294
- JP-A- 2005 180 703
- JP-A- 2005 180 703
- JP-A- 2009 184 091
- JP-A- 2009 184 091
- US-A- 3 221 606
- US-A1- 2004 013 335

## Description

The present invention relates to a main spindle device for a boring machine that is capable of effectively performing cooling and lubrication of a boring spindle.

### BACKGROUND ART

In recent years, for the purpose of reducing machining time or the like, an increase in speed and output of main spindles has been achieved in machine tools. Here, the amount of heat generated from each of the machines also tends to increase along with the increase in speed and output of the main spindles. Thus, the measures against thermal displacement of the machine become an important development theme at the same time. The thermal displacement of the main spindle to which a tool is attached has a large influence on machining accuracy and is attributable to the heat generated from each unit of the machine during operation of the machine. The sources of heat generation include a tool for machining a workpiece, a bearing and a gear for rotating the main spindle, and the like.

In this respect, heretofore, a main spindle device configured to supply coolant to an inner side of the main spindle has been provided as one of the measures against thermal displacement of the main spindle. Such a main spindle device for a machine tool is disclosed in JP Hei 8-71888A, for example.

JP 58034294 A discloses a supporting arrangement for a rotatable milling main spindle and a rotatable boring main spindle, wherein the latter, in addition to its own rotational movement, is to make an axial movement, too. The device has a special internal lubricating oil pump mechanism in the form of the piston located directly on the milling main spindle. An oil groove to which lubricating oil is supplied is the entire cylindrical space between the boring main spindle and the milling main spindle.

US 2004/013335 A1 discloses a rotating shaft apparatus such as a spindle apparatus of a machine tool that only performs a rotational movement. A spindle is rotationally supported by bearings. A spiral groove for cooling oil is formed in the inner peripheral surface of the spindle in the vicinity of the bearings and is permanently closed by a sleeve. Therefore, there is no relative movement between the sleeve and the spiral groove since the sleeve is fitted to a center bore of the spindle.

### SUMMARY OF THE INVENTION

### PROBLEM TO BE SOLVED BY THE INVENTION

Among machine tools, boring machines are configured to allow movement of boring spindles in an axial direction thereof for the purpose of allowing machining of small diameter holes or machining of inner peripheral surfaces. Thus, it is necessary to perform not only cooling but also sufficient lubrication for the boring spindles.

Accordingly, the present invention is made to solve the aforementioned problem and aims to provide a main spindle device for a boring machine that is capable of achieving an improvement in machining accuracy by effectively performing cooling and lubrication of a boring spindle.

### MEANS FOR SOLVING THE PROBLEM

A main spindle device for a boring machine according to invention for solving the aforementioned problem has the features of claim 1. The main spindle device comprises:
a cylinder member of a cylindrical shape rotatably supported by a plurality of bearings in a housing;
a boring spindle supported movably in an axial direction thereof by an inner peripheral surface of the cylinder member and configured to rotate about an axial center thereof together with the cylinder member;
a supply passage formed in a portion of the cylinder member that faces at least the bearing placed on a spindle front-end side, the supply passage configured to supply oil along the axial direction of the spindle; and
a spiral groove which is formed spirally along the spindle axial direction in the inner peripheral surface of the cylinder member and through which the oil supplied from the supply passage flows from the spindle front-end side to a spindle rear-end side.

The main spindle device for a boring machine according to a second invention for solving the aforementioned problem is characterized in that the main spindle device comprises:
a fixed side annular member of an annular shape provided on an inner peripheral surface of the housing;
a rotation side annular member of an annular shape provided on an outer peripheral surface of the cylinder member;
an inner side annular portion formed annularly on an inner peripheral surface of the fixed side annular member and having an inner end slidable on an outer peripheral surface of the rotation side annular member; and
an outer side annular portion formed annularly on the outer peripheral surface of the rotation side annular member and having an outer end slidable on the inner peripheral surface of the fixed side annular member, wherein
oil is supplied to the supply passage via an oil pool portion surrounded by the fixed side annular member, the rotation side annular member, the inner side annular portion and the outer side annular portion.

### EFFECTS OF THE INVENTION

Accordingly, with the main spindle device for a boring machine according to the present invention, it is possible to effectively cool the boring spindle and the cylinder member on the spindle front-end side that are most affected by radiation heat from a tool generating heat during machining, as well as a sliding portion between the cylinder member and the bearings. Meanwhile, it is possible to entirely lubricate the boring spindle by the oil used for the cooling. Thus, it is made possible to suppress thermal displacement of the boring spindle in its axial direction while improving the sliding properties of the boring spindle. Accordingly, an improvement in machining accuracy can be achieved.

### BRIEF DESCRIPTION OF THE DRAWINGS

[FIG. 1] FIG. 1 is a front view of a boring machine including a main spindle device according to an embodiment of the present invention.
[FIG. 2] FIG. 2 is a side view of the boringmachine including the main spindle device according to the embodiment of the present invention.
[FIG. 3] FIG. 3 is a schematic configuration diagram of the main spindle device according to the embodiment of the present invention.

### MODE FOR CARRYING OUT THE INVENTION

Hereinafter, a description will be given of a main spindle device for a boring machine according to the present invention in detail with reference to the drawings.

### EMBODIMENT

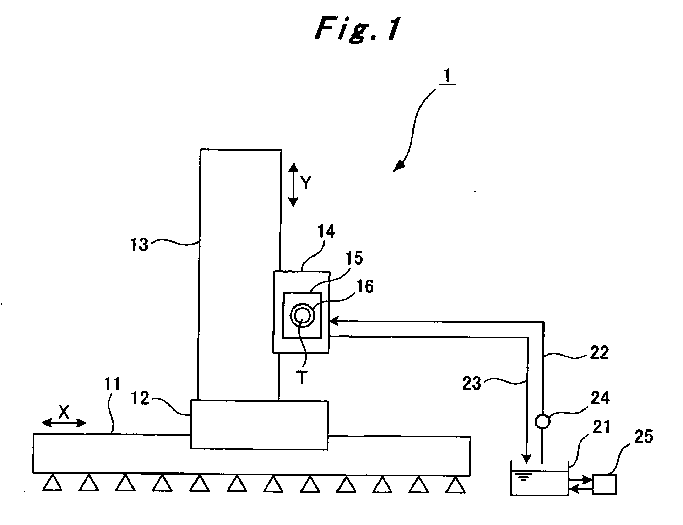

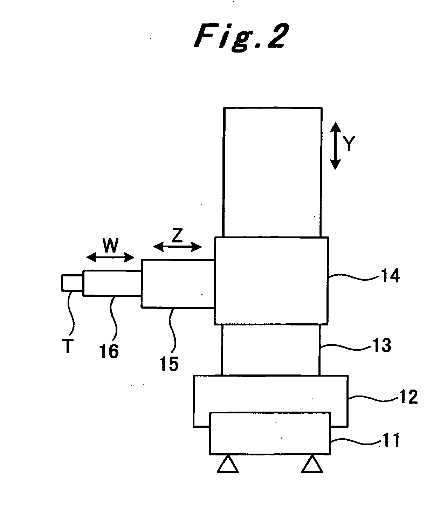

First, a description will be given of a configuration of a horizontal boring machine 1 to which the main spindle device for a boring machine according to the present invention is applied, with reference to FIG. 1 and FIG. 2.

As shown in FIG. 1 and FIG. 2, a bed 11, which is fixed to the floor, is provided to the horizontal boring machine 1, and a column base 12 is supported movably in a horizontal X-axis direction by an upper surface of the bed 11. In addition, a column 13 is vertically provided on an upper surface of the column base 12, and a saddle 14 is supported by a side surface of the column 13 in such a manner as to be movable upward and downward in a vertical Y-axis direction. Moreover, a ram (housing) 15 is supported in the saddle 14 in such a manner as to be movable in a horizontal Z-axis direction, and a boring spindle 16 is supported in the ram 15 in such a manner as to be movable (slidable) in its axial direction (W-axis direction in parallel with the Z-axis direction) and also to be rotatable about its axial center. Moreover, a tool T is detachably attached to a leading end (front end) of the boring spindle 16.

Here, a lubricant is supplied to and discharged from the boring spindle 16 via the saddle 14 and the ram 15 in order to perform cooling and lubrication for the boring spindle 16 in the horizontal boring machine 1.

Accordingly, a storage tank 21 for storing the lubricant therein is provided to the horizontal boring machine 1, and a supply pipe 22 and a discharge pipe 23 connect between the storage tank 21 and the saddle 14. Among these pipes, a pump 24 is connected to the supply pipe 22. Moreover, an oil cooler 25 is connected to the storage tank 21. Accordingly, the lubricant stored in the storage tank 21 is always circulated between the storage tank 21 and the oil cooler 25 and is adjusted to a predetermined temperature by the oil cooler 25.

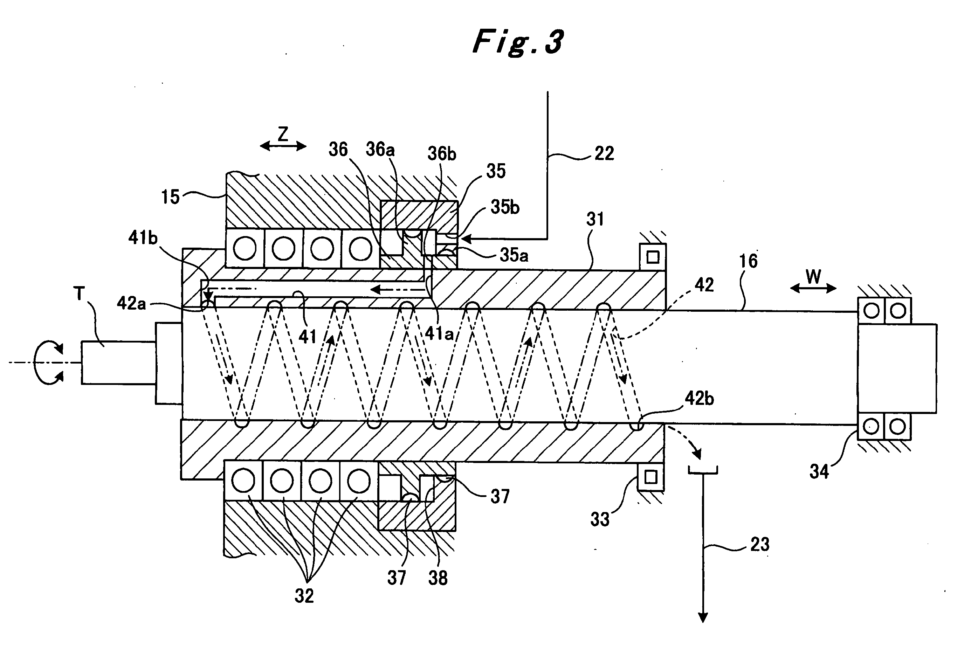

Next, a main spindle device for the horizontal boring machine 1 will be described with reference to FIG. 3.

As shown in FIG. 3, a cylindrical sleeve (cylinder member) 31 is rotatably supported by an inner peripheral surface of the ram 15 via multiple bearings 32, 33 and the boring spindle 16 is fitted inside this sleeve 31. In addition, an inner peripheral surface of the sleeve 31 is splined or keyed to an outer peripheral surface of the boring spindle 16, and a rear end of the boring spindle 16 is rotatably supported by the inner peripheral surface of the ram 15 via bearings 34. Thus, the boring spindle 16 is configured to be movable in the W-axis direction with respect to the sleeve 31 and also to be rotatable about its axial center together with the sleeve 31.

Moreover, a fixed side annular member 35 of an annular shape is fixed to the bearing 32 on a spindle rear-end side on the inner peripheral surface of the ram 15, and a rotation side annular member 36 of an annular shape is fixed to the bearing 32 on the spindle rear-end side on the outer peripheral surface of the sleeve 31. Here, the fixed side annular member 35 and the rotation side annular member 36, which is placed at an inner side of the fixed side annular member 35 in a spindle radial direction, are arranged in such a manner as to face each other in the spindle radial direction.

Here, the fixed side annular member 35 is formed to have an outer diameter larger than the outer diameter of the bearings 32, and an inner side annular portion 35a of an annular shape, which protrudes inward in the spindle radial direction, is formed on an inner peripheral surface of the fixed side annular member 35. The inner end of the inner side annular portion 35a is in contact with an outer peripheral surface of the rotation side annular member 36 via a seal member 37. Thus, even when the rotation side annular member 36 rotates together with the sleeve 31, the inner end of the inner side annular portion 35a is slidable on the outer peripheral surface of the rotation side annular member 36. Moreover, a communication hole 35b is formed in a spindle axial direction in the inner side annular portion 35a, and the supply pipe 22 is connected to this communication hole 35b.

Meanwhile, the front end of the rotation side annular member 36 is connected to a rear end of an inner race of the bearing 32, and an outer side annular portion 36a of an annular shape, which protrudes outward in the spindle radial direction, is formed on an outer peripheral surface of the rotation side annular member 36. The outer side annular portion 36a is placed closer to the spindle front-end side than the inner side annular portion 35a of the fixed side annular member 35, and the outer end of the outer side annular portion 36a is in contact with an inner peripheral surface of the fixed side annular member 35 via a seal member 37. Thus, even when the rotation side annular member 36 rotates together with the sleeve 31, the outer end of the outer side annular portion 36a is slidable on the inner peripheral surface of the fixed side annular member 35.

Here, as described above, the provision of the inner side annular portion 35a and the outer side annular portion 36 forms an oil pool portion 38 between the fixed side annular member 35 and the rotation side annular member 36. Moreover, a communication hole 36b is formed in the spindle radial direction in the rotation side annular member 36 at the spindle rear-end side of the outer side annular portion 36a so as to be communicated with the oil pool portion 38.

Moreover, a supply passage 41 is formed in the spindle axial direction in the sleeve 31 on the spindle front-end side in such a manner as to face the bearings 32. A spiral groove 42 of a spiral shape, which corresponds to the supply passage 41, is formed in the inner peripheral surface of the sleeve 31 on the spindle front-end side.

A rear-end side communication hole 41a is formed in the spindle radial direction at the rear end of the supply passage 41 and is communicated with the communication hole 36b of the rotation side annular member 36. Meanwhile, a front-end side communication hole 41b is formed in the spindle radial direction at the front end of the supply passage 41 and is communicated with a front-end side communication hole 42a of the spiral groove 42. In addition, a rear-end side communication hole 42b of the spiral groove 42 is communicated with the discharge pipe 23 via a clearance between the inner peripheral surface of the sleeve 31 and the outer peripheral surface of the boring spindle 16.

Accordingly, in a case where processing is performed using the horizontal boring machine 1, the tool T is rotated together with the boring spindle 16 by rotating the sleeve 31, first. Subsequently, the column base 12 is moved in the X-axis direction. Then, the saddle 14 is moved in the Y-axis direction, and the ram 15 is moved in the Z-axis direction. Moreover, the boring spindle 16 is moved in the W-axis direction as appropriate. Accordingly, the tool T performs processing of a not-shown workpiece.

Moreover, the oil cooler 25 is driven simultaneously with start of operation of the horizontal boring machine 1, and the lubricant in the storage tank 21 is adjusted to a predetermined temperature. Thereafter, the pump 24 is driven, and supply of the lubricant is started. Accordingly, the lubricant kept at the predetermined temperature is pumped up from the storage tank 21 by driving of the pump 24 and then supplied to the supply passage 41 through the supply pipe 21 via the oil pool portion 38.

Note that, when the boring spindle 16 does not move in the W-axis direction (when the moving amount in the W-axis direction is zero), the lubricant supplied to the supply passage 41 flows into the spiral groove 42 via the front-end side communication hole 41b and the front-end side communication hole 42a as shown in FIG. 3. Subsequently, after flowing through the spiral groove 42 toward the spindle rear-end side, the lubricant supplied to the spiral groove 42 is discharged into the discharge pipe 23 via the rear-end side communication hole 42b of the spiral groove 42.

In addition, when the boring spindle 16 moves in the W-axis direction, the lubricant supplied to the supply passage 41 flows into the middle portion of the spiral groove 42 via the front-end side communication hole 41b of the supply passage 41. Subsequently, after flowing through the spiral groove 42 toward the spindle rear-end side, the lubricant supplied to the spiral groove 42 is discharged into the discharge pipe 23 via the rear-end side communication hole 42b of the spiral groove 42.

After flowing down to the storage tank 21, the lubricant discharged into the discharge pipe 23 is adjusted to the predetermined temperature again by the oil cooler 25.

Here, during machining, the tool T generates heat, and the radiation heat due to the heat generated from the tool T is transmitted to the boring spindle 16 and the sleeve 31 on the spindle front-end side and the bearings 32 placed on the spindle front-end side. In addition, the sliding portion between the sleeve 31 and the bearings 32 is held at a high temperature due to the rotation of the sleeve 31.

Thus, there is a concern that the boring spindle 16 is thermally displaced in its axial direction. However, cooling of the boring spindle 16, the sleeve 31 and the bearings 32 can be effectively performed. This is because the supply passage 41 is formed on the spindle front-end side in the sleeve 31 in such a manner as to face the bearings 32, and the lubricant supplied through the supply passage 41 flows through the spiral groove 42 from the spindle front-end side to the spindle rear-end side. In addition, the lubricant is always supplied to the spiral groove 42, so that, even when the boring spindle 16 moves in the W-axis direction, the lubrication of the boring spindle 16 can be effectively performed.

Thus, with the main spindle device for a boring machine according to the present invention, the supply passage 41 is formed in the portion of the sleeve 31 that faces the bearings 32 placed on the spindle front-end side, and the spiral groove 42 is formed in the inner peripheral surface of the sleeve 31. Thus, it is possible to effectively cool the boring spindle 16 and the sleeve 31 on the spindle front-end side that are most affected by the radiation heat from the tool T generating heat during machining, as well as the sliding portion between the sleeve 31 and the bearings 32. Meanwhile, it is possible to entirely lubricate the boring spindle 16 by the lubricant used for the cooling. Thus, it is made possible to suppress thermal displacement of the boring spindle 16 in its axial direction while improving the sliding properties of the boring spindle 16. Accordingly, an improvement in machining accuracy can be achieved.

Furthermore, the fixed side annular member 35 is provided on the inner peripheral surface of the ram 15, and the rotation side annular member 36 is provided on the outer peripheral surface of the sleeve 31 while the inner side annular portion 35a and the outer side annular portion 36a are formed thereto, respectively. Thus, the oil pool portion 38 is formed. Accordingly, it is made possible to supply the lubricant to the boring spindle 16 and the sleeve 31 on the spindle front-end side by the simple configuration.

### INDUSTRIAL APPLICABILITY

The present invention is applicable to a main spindle device for a machine tool aimed at suppressing the use amount of oil when oil is used for cooling and lubrication of the spindle.

## Claims

1. A main spindle device for a boring machine, comprising:
a cylinder member (31) of a cylindrical shape rotatably supported by a plurality of bearings (32,34) in a housing (15);
a boring spindle (16) supported movably in an axial direction thereof by an inner peripheral surface of the cylinder member (31) and configured to rotate about an axial center thereof together with the cylinder member (31);
a supply passage (41) formed in a portion of the cylinder member (41) that faces at least the bearing (32) placed on a spindle front-end side, the supply passage (41) configured to supply oil along the axial direction of the spindle (16); and
a spiral groove (42) which is formed spirally along the spindle axial direction in the inner peripheral surface of the cylinder member (31) and through which the oil supplied from the supply passage (41) flows from the spindle front-end side to a spindle rear-end side.

2. The main spindle device for a boring machine according to claim 1, comprising:
a fixed side annular member (35) of an annular shape provided on an inner peripheral surface of the housing (15);
a rotation side annular member (36) of an annular shape provided on an outer peripheral surface of the cylinder member (31);
an inner side annular portion (35a) formed annularly on an inner peripheral surface of the fixed side annular member (35) and having an inner end slidable on an outer peripheral surface of the rotation side annular member (36); and
an outer side annular portion (36a) formed annularly on the outer peripheral surface of the rotation side annular member (36) and having an outer end slidable on the inner peripheral surface of the fixed side annular member (35), wherein
oil is supplied to the supply passage (41) via an oil pool portion (38) surrounded by the fixed side annular member (35), the rotation side annular member (36), the inner side annular portion (35a) and the outer side annular portion (36a).

## Patentansprüche

1. Eine Hauptspindelvorrichtung für eine Bohrmaschine, mit:
einem Zylinderelement (31) einer Zylinderform, das durch eine Mehrzahl von Lagern (32,34) in einem Gehäuse (15) drehbar gelagert ist,
einer Bohrspindel (16), die in einer axial Richtung derselben durch eine Innenumfangsfläche des Zylinderelements (31) bewegbar gelagert ist und konfiguriert ist, um um eine axiale Mitte derselben zusammen mit dem Zylinderelement (31) zu rotieren,
einem Zuführdurchgang (41), der in einem Abschnitt des Zylinderelements (41), welcher zumindest dem Lager (32), das an einer Spindel-Vorderendseite platziert ist, zugewandt ist, wobei der Zuführdurchgang (41) konfiguriert ist, um Öl entlang der axial Richtung der Spindel (16) zuzuführen,
einer Spiralnut (42), die spiralartig entlang der Spindel-Axialrichtung in der Innenumfangsfläche des Zylinderelements (31) ausgebildet ist und durch die das von dem Zuführdurchgang (41) zugeführte Öl von der Spindel-Vorderendseite zu einer Spindel-Hinterendseite strömt.

2. Die Hauptspindelvorrichtung für eine Bohrmaschine gemäß Anspruch 1 mit:
einem ringförmigen Element der feststehenden Seite (35) einer Ringform, das an einer Innenumfangsfläche des Gehäuses (15) vorgesehen ist,
einem ringförmigen Element einer Rotationseite (36) mit einer Ringform, das an einer Außenumfangsfläche des Zylinderelements (31) vorgesehen ist,
einem ringförmigen Abschnitt einer Innenseite (35a), der ringförmig an einer Innenumfangsfläche des ringförmigen Elements der feststehenden Seite (35) ausgebildet ist und ein Innenende besitzt, das an einer Außenumfangsfläche des ringförmigen Elements der Rotationsseite (36) gleiten kann,
einem ringförmigen Abschnitt einer Außenseite (36a), der ringförmig an der Außenumfangsfläche des ringförmigen Elements der Rotationseite (36) ausgebildet ist und ein Außenende besitzt, das an der Innenumfangsfläche des ringförmigen Elements der feststehenden Seite (35) gleiten kann, wobei
Öl zu dem Zuführdurchgang (41) über einen Ölsammelabschnitt (38) zugeführt wird, der von dem ringförmigen Element der feststehenden Seite (35), dem ringförmigen Element der Rotationseite (36), dem ringförmigen Abschnitt der Innenseite (35a) und dem ringförmigen Abschnitt der Außenseite (36a) umgeben ist.

## Revendications

1. Dispositif à broche principale pour une perceuse, comprenant :
un élément (31) de cylindre d'une forme cylindrique, supporté à rotation par une pluralité de paliers (32, 34) dans un carter (15) ;
une broche (16) de perçage, supportée de manière mobile dans une direction axiale de celle-ci par une surface périphérique intérieure de l'élément (31) de cylindre et configurée pour tourner autour d'un centre axial de celle-ci en même temps que l'élément (31) de cylindre ;
un passage (41) d'alimentation, formé dans une partie de l'élément (41) de cylindre qui fait face à au moins le palier (32) placé sur un côté d'extrémité avant de la broche, le passage (41) d'alimentation étant configuré pour envoyer de l'huile le long de la direction axiale de la broche (16) et
une rainure (42) en spirale, qui est formée en spirale le long de la direction axiale de la broche dans la surface périphérique intérieure de l'élément (31) de cylindre et par laquelle l'huile à envoyer, à partir du passage (41) d'alimentation, s'écoule du côté de l'extrémité avant de la broche à un côté de l'extrémité arrière de la broche.

2. Dispositif à broche principale pour une perceuse suivant la revendication 1, comprenant :
un élément (35) annulaire latéral fixe, d'une forme annulaire, prévu sur une surface périphérique intérieure du carter (15) ;
un élément (36) annulaire latéral de rotation, d'une forme annulaire, prévu sur une surface périphérique extérieure de l'élément (31) de cylindre ;
une partie (35a) annulaire latérale intérieure, formée annulairement sur une surface périphérique intérieure de l'élément (35) annulaire latéral fixe et ayant une extrémité intérieure coulissant sur une surface périphérique extérieure de l'élément (36) annulaire latéral de rotation et
une partie (36a) annulaire latérale extérieure, formée annulairement sur la surface périphérique extérieure de l'élément (36) annulaire latéral de rotation et ayant une extrémité extérieure coulissant sur la surface périphérique intérieure de l'élément (36) annulaire latéral fixe, dans lequel
de l'huile est envoyée au passage (41) d'alimentation par une partie (38) de bassin d'huile entourée de l'élément (35) annulaire latéral fixe, de l'élément (36) annulaire latéral de rotation, de la partie (35a) annulaire latérale intérieure et de la partie (36a) annulaire latérale extérieure.
